# DEMANDE DE BREVET EUROPEEN

(11) **EP 0 600 550 A1**
(43) Date de publication de la demande: **08.06.1994**
(21) Numéro de dépôt: 93203313.7
(22) Date de dépôt: 26.11.1993
(51) Int. Cl.: A01C 23/02, A01C 23/00

(54) **Purgeur pneumatique automatisé des conduites de machines d'épandage ou d'injection de lisier ou autres fertilisants**

(30) Priorité: 27.11.1992 BE 9201039
(71) Demandeur: ETS JOSKIN S.A., B-4630 Soumagne (BE)
(72) Inventeur: Joskin, Victor, B-4630 Soumagne (BE)
(74) Mandataire: Vanderperre, Robert

(57) **Abrégé**

Le circuit de ventilation des conduites est régulé par un appareillage de vanne à ouverture temporaire (11), dont la commande est intégrée au sein d'un système de distribution hydraulique séquentielle (9) actionnant et coupant ledit circuit à un moment déterminé entre la fermeture de la vanne d'alimentation en fertilisants (4) et le levage de la machine.

## Description

La présente invention est relative aux machines destinées à épandre ou injecter du lisier ou autres matières fertilisantes et dotées d'un dispositif de nettoyage par ventilation générée par la pompe à vide de la cuve d'alimentation. L'invention concerne en particulier un système assurant automatiquement la purge pneumatique des conduites de la machine après l'arrêt de l'épandage ou de l'injection et avant le levage de la machine.

Le but de l'invention est triple : il s'agit de supprimer les coulées intempestives de lisier en bordures de parcelles traitées ou sur la voirie en nettoyant la machine par ventilation avant son levage, tout en réduisant au minimum la perte de compression interne de la cuve d'alimentation et en évitant autant que faire se peut le rejet d'air vicié dans l'atmosphère.

Le marché propose déjà l'un ou l'autre système pneumatique utilisant l'air comprimé dans la cuve et fonctionnant en alternance avec la commande de la vanne à lisier ou de levage de la machine.

Ces systèmes présentent des inconvénients majeurs à deux points de vue.

D'une part, puisqu'ils libèrent systématiquement toute la pression interne de la cuve, sans possibilité de limitation autre qu'une manoeuvre du chauffeur ou la reprise plus ou moins rapide de l'épandage ou de l'injection au début de la ligne suivante, les systèmes actuels contraignent le charroi à s'arrêter au début de chaque ligne, outil en position de travail, pour fermer l'échappement d'air de la cuve, afin que la pompe vacuum puisse à nouveau générer la pression de service nécessaire à l'expulsion du lisier hors de la cuve. C'est donc l'économie du système qui est en défaut, puisqu'il se traduit par une perte de temps, une consommation d'énergie accrue au niveau de la pompe et la pollution par l'air dégagé inutilement.

D'autre part, puisque la ventilation des conduites se poursuit même avec l'outil relevé, le risque de pertes intempestives de lisier subsiste en partie avec les inconvénients écologiques du surépandage dans les fourrières. Et, puisque la ventilation ne s'arrête que lorsqu'on reprend l'injection, on rejette une quantité de plus en plus importante d'air pollué dans l'atmosphère.

Le système de purge automatique des conduites suivant l'invention consiste en un circuit de ventilation des conduites générée par le processus d'expulsion pneumatique de la cuve. Ce circuit de ventilation est caractérisé en ce qu'il est régulé par un appareillage de vannes à ouverture temporaire, dont la commande est intégrée au sein d'un système de distribution hydraulique séquentielle actionnant et coupant ledit circuit à un moment déterminé entre la fermeture de la vanne d'alimentation en fertilisants et le levage de la machine.

Pour mieux faire comprendre l'invention celle-ci est décrite maintenant plus en détail sur la base des dessins annexés, à titre d'exemple uniquement, montrant en :
Figure 1 le schéma de montage du circuit de ventilation suivant l'invention, dans le cas d'une machine d'injection de lisier en culture;
Figure 2 la composition détaillée du système de vanne à ouverture temporaire;
Figures 3 à 6 le déroulement de la procédure complète, incluant la purge de l'injecteur, et
Figure 7 le schéma hydraulique du bloc de distribution hydraulique séquentielle.

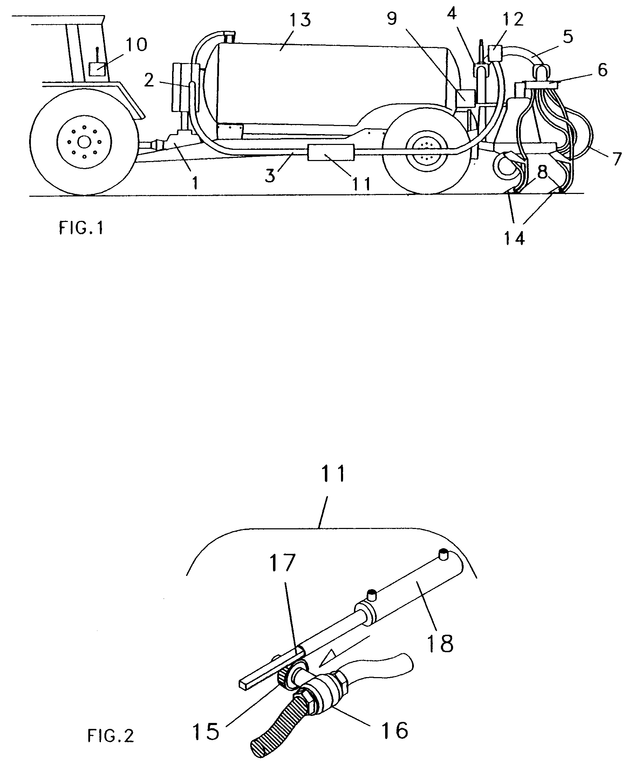

La figure 1 permet de visualiser le schéma de montage suivant l'invention, illustré pour une meilleure clarté, dans le cas d'une machine d'injection de lisier en culture. L'alimentation du système en air est assurée par la même pompe vacuum 1, qui sert à comprimer le lisier dans la cuve 13. L'air est capté en 2 à un point quelconque du circuit de compression entre la pompe 1 et la cuve 13 ou sur l'un de ces deux éléments; un tuyau 3 amène l'air comprimé vers un système de vanne à ouverture temporaire 11 et le dirige en amont du système d'injection vers un clapet anti-retour 12 fixé sur le tuyau d'alimentation 5 du répartiteur 6. C'est le répartiteur lui-même qui assure la ventilation de l'air à travers les différentes conduites d'injection 7, expulsant le lisier résiduel dans le sol via les bouches d'injection 8. Le système est mis en service automatiquement par un bloc de distribution hydraulique séquentielle 9, quand le conducteur actionne le distributeur du tracteur 10 pour stopper l'injection et lever l'outil 14.

La figure 2 donne la composition détaillée du système de vanne à ouverture temporaire représenté schématiquement sur la figure 1 au repère 11. Ce système, dans le cas spécifique présent, se compose d'un pignon 15, d'une vanne 16, d'une crémaillère 17 et d'un vérin 18.

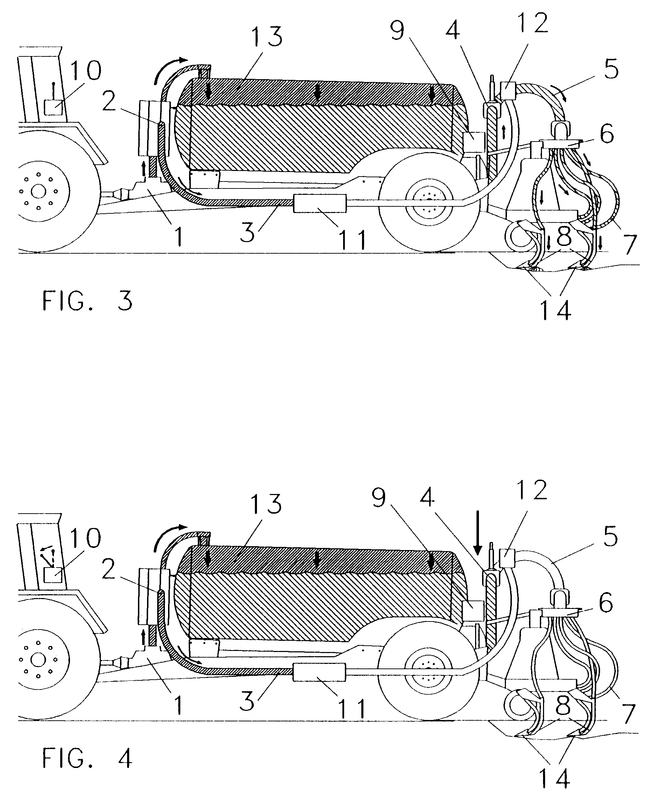

Pendant la phase d'injection, en figure 3, la pompe vacuum 1 génère la pression (représentée en hachuré foncé) dans la cuve 13 pour expulser le lisier (représenté en hachuré clair) vers les injecteurs 8 qui l'enfouissent dans le sol. La pompe 1 génère également une pression dans la première partie 3 du système de purge.

Pour arrêter l'injection (figure 4), en fin de ligne par exemple, le conducteur actionne le distributeur 10, qui commande le bloc de distribution hydraulique séquentielle 9 : celui-ci commande d'abord la fermeture de la vanne arrière 4 pour stopper l'expulsion du lisier.

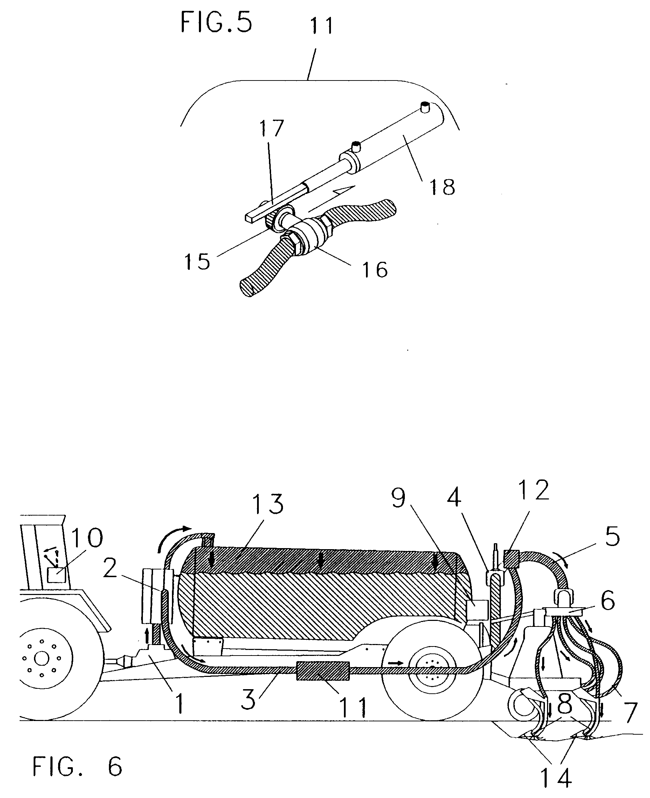

Le bloc séquentiel 9 commande ensuite automatiquement la mise en service du système de purge 11. La figure 5 montre comment le vérin 18 ouvre la vanne de ventilation 16 qui libère de l'air comprimé vers sa conduite mère 5, puis le répartiteur 6, qui le distribue régulièrement vers les différentes conduites d'injection 7. Le pignon 15 est fixe dans un sens, libre dans l'autre, grâce à un système de cliquets. Lors du terrage de l'injecteur dans le sol, le vérin 18 sort de sa chambre, entraînant la rotation du pignon 15 mais reste sans effet sur l'ouverture de la vanne 16, parce que le pignon est libre dans ce sens. Avant le levage de l'outil 14, le bloc de distribution hydraulique séquentielle 9 commande la rentrée du vérin 18, de manière à ajuster le temps de ventilation et le temps de rotation du répartiteur 6. La longueur du vérin 18 est déterminée pour ouvrir puis fermer la vanne 16 sur une seule course : quand le vérin est complètement rentré, la vanne 16 est donc à nouveau fermée.

Le temps de course du vérin 18 et donc la durée de ventilation sont préréglables à partir de commande hydraulique séquentielle 9. Le trajet de l'air à travers la machine est représentée en figure 6.

Ce n'est que lorsque la purge est terminée, en fin de course du vérin 18, que le bloc séquentiel 9 commande le levage des outils 14.

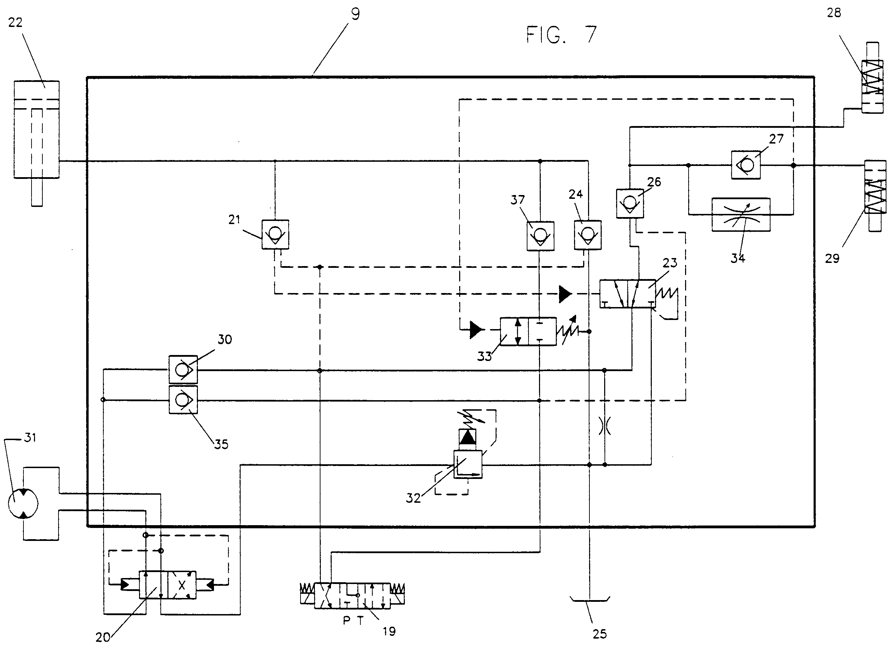

L'alignement dans le temps des différentes phases ci-avant est assuré par un bloc hydraulique spécifique. La figure 7 présente le bloc de distribution hydraulique séquentielle 9 sous forme de schéma hydraulique au sein duquel les pilotages sont représentés en traits discontinus. Le bloc est commandé par le distributeur 10 du tracteur représenté ici par son tiroir hydraulique 19.

Pour mettre la machine en phase de travail, le conducteur actionne le distributeur 10, qui déplace ainsi le tiroir vers la gauche : l'huile est ainsi comprimée vers le bloc séquentiel 9. L'huile comprimée se dirige vers les clapets anti-retour pilotés 21 et 24, qu'elle pilote en positon ouverte. Puisque le clapet 21 est ouvert, l'huile qui retenait le vérin simple effet 22 de levage de l'outil en position rentrée, peut s'échapper, laissant ainsi sortir le vérin 22 : et l'outil descend. L'huile s'échappant du vérin 22 repasse à travers le clapet 21 pour aller piloter le tiroir hydraulique 23 vers la droite. Une fois ce tiroir en position pilotée, l'huile s'échappant du vérin 22 s'y trouve bloquée; elle s'échappe alors, via le clapet 24 piloté en position ouverte, vers le réservoir d'huile 25 du tracteur.

Après chute de la pression d'huile due à l'arrivée en fin de course du vérin de levage 22, le pilotage du tiroir hydraulique 23 s'arrête, lequel tiroir revient à sa position initiale. L'huile en provenance du tiroir 19 du tracteur peut ainsi traverser le tiroir 23 vers le clapet anti-retour 26. De celuici, l'huile poursuit son chemin vers le vérin simple effet 28 de la vanne à lisier, qui est ainsi ouverte.

Simultanément, l'huile passe à travers le clapet anti-retour 27 vers le vérin simple effet 29 de comande des vannes de purge. Ce vérin 29 sort jusqu'en fin de course pour atteindre sa position d'action telle que présentée en figure 2. Cette course sortante du vérin n'a aucune action sur le sytème de purge.

Une fois le vérin 29 en bout de course, l'huile doit se diriger vers le tiroir hydraulique 33, qu'elle pilote en position fermée pour bloquer le circuit de relevage de machine. A ce moment, la pression d'huile augmente au sein du bloc, puisque l'huile est bloquée aux vérins 28 et 29 et au tiroir 33. Lorsqu'une pression déterminée est atteinte, le clapet de mise à pression 32 s'ouvre, laissant ainsi l'huile du circuit de fonctionnement du moteur de répartiteur 31 se mettre en mouvement. En effet, la pression du clapet 32 est tarée à un niveau plus élevé que celle d'ouverture des vérins 28 et 29.

Ainsi, l'huile provenant du tiroir 19 du tracteur traverse le clapet anti-retour 30, puis le tiroir hydraulique 20 pour faire tourner le moteur 31. De là, l'huile repasse à travers le tiroir 20 vers le clapet de mise à pression 32 pour terminer sa course dans le réservoir d'huile 25 du tracteur. La boucle est ainsi bouclée.

Lorsque le conducteur désire stopper le travail de la machine, il actionne le distributeur du tracteur dans l'autre sens, poussant ainsi le tiroir 19 vers l'extrême droite : le circuit hydraulique est ainsi inversé.

L'hui le file d'abord vers le tiroir 33, où elle se trouve bloquée, puisque ce tiroir est piloté en position fermée. Dès lors, l'huile se dirige vers le clapet 26, qu'elle pilote en position ouverte, ainsi que vers le clapet anti-retour 35 qu'elle traverse pour continuer, non vers le clapet antiretour 30 où elle se trouve bloquée, mais vers le circuit de fonctionnement du moteur de répartiteur 31, via le tiroir 20, puis vers le clapet de mise à pression 32 et enfin le réservoir d'huile 25 du tracteur. On remet ainsi en route le moteur du répartiteur.

A ce moment, puisque le clapet 26 est piloté en position ouverte, l'huile du vérin 28 s'échappe vers le clapet 20. L'huile du vérin 29 en fait de même, en passant d'abord à travers non pas le clapet 27, où elle se trouve bloquée, mais un régulateur de débit 30 destiné à régler le temps de course du vérin 29. Toute cette huile venant du clapet 26 retourne au tiroir 19 du tracteur via le tiroir 23.

Enfin, la chute de pression provoquée par la fin de course du vérin 29 libère le tiroir 33, qui retrouve sa position initiale; l'huile en provenance du tiroir 19 du tracteur peut a lors repasser à travers le tiroir 33 pour aller, via le clapet anti-retour 36, commander la rentrée du vérin de levage 22 afin de remonter l'outil.

Une fois ce vérin complètement rentré, le conducteur replace le tiroir 19 dans sa position neutre, afin de bloquer la circulation d'huile et tous les éléments commandables dans leur position de repos telle que la présente le schéma.

### Liste des repères

- 1: Pompe vacuum
- 2: Prise d'air sous pression
- 3: Conduite d'air
- 4: Vanne à lisier
- 5: Conduite-mère alimentation du répartiteur
- 6: Répartiteur
- 7: Conduite d'injection
- 8: Bouches d'injection ou éléments-injecteurs
- 9: Bloc de distribution hydraulique séquentielle
- 10: Distributeur hydraulique du tracteur
- 11: Système de vanne à ouverture temporaire
- 12: Clapet anti-retour
- 13: Cuve
- 14: Outil sous-soleur
- 15: Pignon (sur roue libre dans un sens)
- 16: Vanne pneumatique
- 17: Crémaillère
- 18: Vérin de commande des vannes de purge
- 19: Tiroir hydraulique du distributeur du tracteur
- 20: Tiroir hydraulique fixé sur le bloc
- 21: Clapet anti-retour piloté
- 22: Vérin de relevage simple effet
- 23: Tiroir hydraulique piloté
- 24: Clapet anti-retour piloté
- 25: Réservoir d'huile du tracteur
- 26: Clapet anti-retour piloté
- 27: Clapet anti-retour
- 28: Vérin de vanne simple effet
- 29: Vérin de purge simple effet
- 30: Clapet anti-retour
- 31: Moteur de répartiteur
- 32: Clapet de mise à pression
- 33: Tiroir hydraulique piloté
- 34: Régulateur de débit
- 35: Clapet anti-retour
- 36: Clapet anti-retour

## Revendications

1. Purgeur pneumatique automatisé des conduites de machine d'épandage ou d'injection de lisier ou autres fertilisants utilisant un procédé d'expulsion pneumatique de la matière, caractérisé en ce que le circuit de ventilation des conduites est régulé par un appareillage de vanne à ouverture temporaire (11), dont la commande est intégrée au sein d'un système de distribution hydraulique séquentielle (9) actionnant et coupant ledit circuit à un moment déterminé entre la fermeture de la vanne d'alimentation en fertilisants (4) et le levage de la machine.
